# EUROPEAN PATENT APPLICATION

(11) **EP 4 752 408 A1**
(43) Date of publication of application: **03.06.2026**
(21) Application number: 25216439.7
(22) Date of filing: 17.11.2025
(51) Int. Cl.: F16K 3/02, F16K 11/074, F16K 27/04

(54) **SWITCHING APPARATUS**

(30) Priority: 02.12.2024 JP 2024209265
(71) Applicant: Toyota Jidosha Kabushiki Kaisha, Toyota-shi, Aichi-ken 471-8571 (JP)
(72) Inventor: FURUKUBO, Tarou, Toyota-shi, Aichi-Ken 471-8571 (JP); NISHIMOTO, Takashi, Toyota-shi, Aichi-Ken 471-8571 (JP)
(74) Representative: Cabinet Beau de Loménie

(57) **Abstract**

In a switching apparatus (100), a gasket (130) seals a gap between a bottom wall portion (111) and an intermediate member (120). A drive unit (140) is biased toward the intermediate member (120). The drive unit (140) is configured to be driven to be switchable between a state of facing a second communicating hole (120Hb) and forming a first route (P1) through which a heat medium flows to an outside from an inside of a case (110) via a first communicating hole (120Ha) and a first outlet hole (111Ha), and a state of facing the first communicating hole (120Ha) and forming a second route (P2) through which the heat medium flows to the outside from the inside of the case (110) via the second communicating hole (120Hb) and a second outlet hole (111Hb). A locking portion (150) is provided to be locked with respect to the intermediate member (120) upon an application of an external force to the intermediate member (120) in a direction separating from the bottom wall portion (111).

## Description

### BACKGROUND OF THE INVENTION

### 1. Field of the Invention

The present disclosure relates to a switching apparatus.

### 2. Description of Related Art

In Japanese Unexamined Patent Application Publication No. 2024-081902 (JP 2024-081902 A), a heat management system is disclosed. A refrigerant flows through a flow path of the heat management system so as to cool a drive apparatus that causes a vehicle to travel. A flow regulating valve is provided in a fluid circuit formed by the flow path. The flow regulating valve is a three-way valve, for example. The flow regulating valve is configured to be able to regulate the ratio between the amount by which the refrigerant flows from a first part to a second part and the amount by which the refrigerant flows from the first part to a third part.

### SUMMARY OF THE INVENTION

In the heat management system, a switching apparatus that switches a flowing route of a heat medium such as a refrigerant includes a case and a drive unit disposed on the inside thereof, for example. The flowing route is switched as a result of the drive unit being driven on the inside of the case.

Here, when the heat management system is in operation, the circuit of the heat management system is filled with the heat medium. Before the heat management system is operated, an operator fills the circuit with the heat medium. There may be cases in which the flow of the heat medium in the circuit at the time of filling becomes opposite to the flow of the heat medium in the circuit when the heat management system is in operation. When the heat medium flows backward in the switching apparatus, there is a risk that the heat medium may unintentionally flow into a gap through which the heat medium does not flow at the time of normal operation of the heat management system. As a result, there is a risk that the position of a member disposed between the case and the drive unit may be shifted.

The present disclosure provides a switching apparatus capable of reducing positional shift of a member disposed between a case and a drive unit when the inside of the circuit of the heat management system is filled with a heat medium.

A switching apparatus according to an aspect of the present disclosure is configured to switch a flowing route of a heat medium in a heat management system. The switching apparatus includes a case, an intermediate member, a gasket, a drive unit, and a locking portion. The case includes a bottom wall portion in which a first outlet hole and a second outlet hole that each pass through the bottom wall portion in a main direction are provided, a top wall portion that faces the bottom wall portion in the main direction, and a side wall portion positioned between the bottom wall portion and the top wall portion. An inlet hole is provided in the top wall portion or the side wall portion. The intermediate member is positioned between the bottom wall portion and the top wall portion. A first communicating hole and a second communicating hole that each pass through the intermediate member in the main direction are provided in the intermediate member. The first communicating hole is aligned with the first outlet hole in the main direction. The second communicating hole is aligned with the second outlet hole in the main direction. The gasket seals a gap between the bottom wall portion and the intermediate member. The drive unit is on opposite side of the intermediate member from the bottom wall portion. The drive unit is biased toward the intermediate member. The drive unit is configured to be driven to be switched between a state of facing the second communicating hole and forming a first route through which the heat medium flows to the outside from the inside of the case via the first communicating hole and the first outlet hole, and a state of facing the first communicating hole and forming a second route through which the heat medium flows to the outside from the inside of the case via the second communicating hole and the second outlet hole. The locking portion is provided so as to be locked with respect to the intermediate member upon application of an external force to the intermediate member in a direction separating from the bottom wall portion.

With the configuration described above, there may be cases in which the drive unit biased toward the intermediate member is displaced so as to be separated from the intermediate member when the heat medium flowing backward from the second outlet hole passes through the second communicating hole and collides with the drive unit when the drive unit is facing the second communicating hole, for example. As a result, the heat medium may enter the gap between the intermediate member and the bottom wall portion, and the heat medium may apply a force to the intermediate member in a direction separating from the bottom wall portion. At this time, by locking the locking portion with respect to the intermediate member, the intermediate member can be restrained from being displaced so as to be separated from the bottom wall portion. Therefore, cases in which the heat medium that has entered the gap shifts the position of the gasket between the intermediate member and the bottom wall portion can be reduced.

Therefore, the positional shift of a member disposed between the case and the drive unit can be reduced when the inside is filled with the heat medium.

In the switching apparatus according to an aspect of the present disclosure, the locking portion may be in abutment with the intermediate member on the side opposite to the bottom wall portion side of the intermediate member.

With the configuration described above, the intermediate member can be further restrained from being displaced so as to be separated from the bottom wall portion when the heat medium flows backward.

In the switching apparatus according to an aspect of the present disclosure, the locking portion may be a separate member from the case. With this configuration, the locking portion can be relatively easily disposed inside the case.

In the switching apparatus according to an aspect of the present disclosure, the locking portion may be positioned between the top wall portion and the intermediate member and may be in abutment with both the top wall portion and the intermediate member.

With the configuration described above, when the heat medium flows backward, the intermediate member can be restrained even more from being displaced so as to be separated from the bottom wall portion.

In the switching apparatus according to an aspect of the present disclosure, the locking portion may be cylindrical. The locking portion may have a first opening end portion and a second opening end portion positioned opposite to the first opening end portion. The drive unit may be disposed on the inner side of the locking portion. The first opening end portion may face the intermediate member. The second opening end portion may face the top wall portion.

With the configuration described above, a region in which the locking portion is locked with respect to the intermediate member can be increased by the second opening end portion.

In the switching apparatus according to an aspect of the present disclosure, the inlet hole may be provided in the side wall portion. A side communicating hole that provides communication between an inner circumferential side and an outer circumferential side of the locking portion may be provided in the locking portion. The side communicating hole may face the inlet hole.

With the configuration described above, the locking portion can be restrained from blocking the inflow of the heat medium from the inlet hole.

In the switching apparatus according to an aspect of the present disclosure, an end edge of the first communicating hole may be positioned on the inner side of the first outlet hole in a view along the main direction. An end edge of the second communicating hole may be positioned on the inner side of the second outlet hole in a view along the main direction.

With the configuration described above, cases in which the heat medium enters a place between the bottom wall portion and the intermediate member can be reduced by the end edge of the first communicating hole when the heat medium flows to the outside from the inside of the case via the first outlet hole or by the end edge of the second communicating hole when the heat medium flows to the outside from the inside of the case via the second outlet hole. When the heat medium flows in an orientation opposite to the above, the heat medium that is to flow from the first outlet hole or the second outlet hole easily collides with end edge parts of those communicating holes. However, in the switching apparatus according to an aspect of the present disclosure, the locking portion is locked with respect to the intermediate member at this time, and hence the intermediate member is restrained from being displaced so as to be separated from the bottom wall portion.

With the present disclosure, the positional shift of the member disposed between the case and the drive unit can be reduced when the inside is filled with the heat medium.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of a configuration of a heat management system in which a switching apparatus according to one embodiment of the present disclosure is used;
FIG. 2 is a perspective view showing the switching apparatus provided in the heat management system shown in FIG. 1;
FIG. 3 is a schematic sectional view showing the switching apparatus according to one embodiment of the present disclosure;
FIG. 4 is a sectional view of the switching apparatus in FIG. 3 seen from the direction of the arrows of line IV-IV;
FIG. 5 is a partial exploded perspective view showing the switching apparatus according to one embodiment of the present disclosure;
FIG. 6 is a schematic sectional view showing the switching apparatus when a drive unit is in a second state;
FIG. 7 is a partial exploded perspective view of the switching apparatus when the drive unit is in the second state;
FIG. 8 is a partial exploded perspective view of the switching apparatus when the drive unit is in a third state;
FIG. 9 is a view showing the configuration of the heat management system in FIG. 1 in which an example of a flow of a heat medium supplied before operation is shown;
FIG. 10 is a sectional view showing the switching apparatus in FIG. 3 with the flow of the heat medium flowing backward;
FIG. 11 is a sectional view showing the switching apparatus in FIG. 10 in a partially enlarged manner; and
FIG. 12 is a partial sectional view of a switching apparatus according to a comparative example.

### DETAILED DESCRIPTION OF EMBODIMENTS

A switching apparatus according to one embodiment of the present disclosure is described below with reference to the drawings. The same or equivalent parts in the drawings will be denoted by the same reference signs, and description thereof will not be repeated.

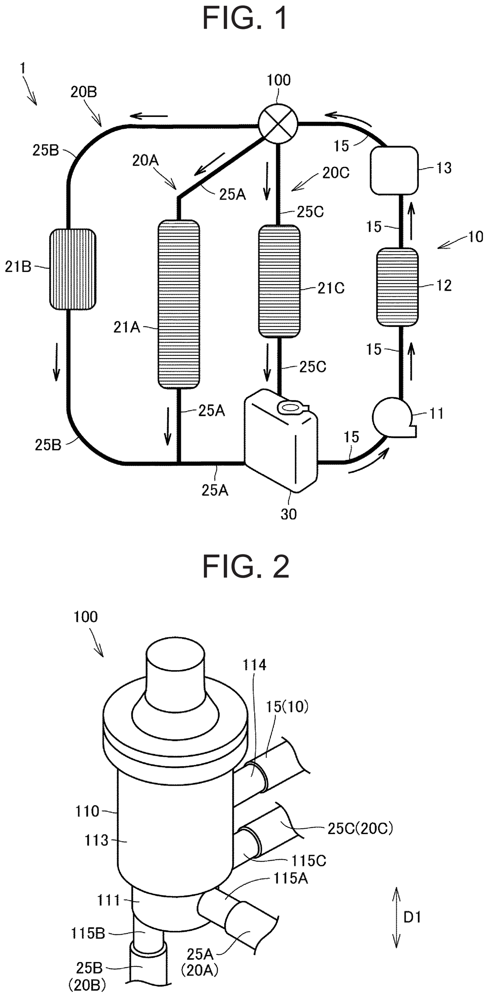

FIG. 1 is a diagram showing an example of a configuration of a heat management system in which a switching apparatus according to one embodiment of the present disclosure is used. FIG. 2 is a perspective view showing the switching apparatus provided in the heat management system shown in FIG. 1. As shown in FIG. 1 and FIG. 2, a switching apparatus 100 according to one embodiment of the present disclosure may be used as a switching apparatus that switches a flowing route of a heat medium in a heat management system 1. First, the heat management system 1 is described. However, the heat management system 1 in which the switching apparatus 100 is used is not limited to that described below. The heat management system 1 may be applied to equipment of an electrified vehicle (xEV), for example.

The heat management system 1 includes an upstream circuit 10 positioned on the upstream side, and a first downstream flow path 20A, a second downstream flow path 20B, and a third downstream flow path 20C positioned on the downstream side when seen from the switching apparatus 100. The switching apparatus 100 causes the heat medium flowing into the switching apparatus 100 from the upstream circuit 10 to further flow to the first downstream flow path 20A, the second downstream flow path 20B, or the third downstream flow path 20C. A specific configuration of the switching apparatus 100 is described later.

The heat management system 1 further includes a reservoir tank 30. The reservoir tank 30 is connected to an upstream end of the upstream circuit 10. The reservoir tank 30 is directly or indirectly connected to downstream ends of the first downstream flow path 20A, the second downstream flow path 20B, and the third downstream flow path 20C.

The upstream circuit 10 includes a pump 11, a condenser 12, a heater 13, and a plurality of upstream pipes 15. The pump 11, the condenser 12, and the heater 13 are disposed in the stated order from the reservoir tank 30 to the switching apparatus 100. A corresponding one of the upstream pipes 15 connects each of the place between the reservoir tank 30 and the pump 11, the place between the pump 11 and the condenser 12, the place between the condenser 12 and the heater 13, and the place between the heater 13 and the switching apparatus 100. The pump 11 causes the heat medium to flow toward the switching apparatus 100 from the reservoir tank 30 side in the upstream circuit 10. The condenser 12 may typically be a water-cooled condenser.

The first downstream flow path 20A includes a radiator 21A and a plurality of first downstream pipes 25A. A corresponding one of the first downstream pipes 25A connects each of the place between the switching apparatus 100 and the radiator 21A and the place between the radiator 21A and the reservoir tank 30.

The second downstream flow path 20B includes a heat exchanger 21B and a plurality of second downstream pipes 25B. A corresponding one of the second downstream pipes 25B connects the place between the switching apparatus 100 and the heat exchanger 21B and the place between the heat exchanger 21B and the first downstream pipes 25A connected to the reservoir tank 30 and the radiator 21A. The heat exchanger 21B and the reservoir tank 30 may be directly connected to each other by the second downstream pipe 25B.

The third downstream flow path 20C includes a heater core 21C and a plurality of third downstream pipes 25C. A corresponding one of the third downstream pipes 25C connects each of the place between the switching apparatus 100 and the heater core 21C and the place between the heater core 21C and the reservoir tank 30.

When the heat management system 1 is in operation, the upstream circuit 10, the first downstream flow path 20A, the second downstream flow path 20B, the third downstream flow path 20C, the reservoir tank 30, and the switching apparatus 100 are filled with the heat medium, and the heat medium flows through the inside of the apparatus and the circuit by the operation of the pump 11. The heat medium is typically a liquid refrigerant. The heat medium may be water or an aqueous solution. The heat medium may be insulating oil. In the present embodiment, the heat medium may be a long life coolant (LLC) including ethylene glycol, for example.

The heat medium can be supplied from the reservoir tank 30 before the operation of the heat management system 1. The heat medium may be supplied in a factory that manufactures equipment of an electrified vehicle or the like in which the heat management system 1 is installed. Procedures for supplying the heat medium from the reservoir tank 30 are described later.

The upstream pipes 15, the first downstream pipes 25A, the second downstream pipes 25B, and the third downstream pipes 25C are configured by elastically deformable pipes such as rubber pipes so as to be easily bendable.

The radiator 21A may be included in the second downstream flow path 20B or the third downstream flow path 20C. The heat exchanger 21B may be included in the first downstream flow path 20A or the third downstream flow path 20C. The heater core 21C may be included in the first downstream flow path 20A or the second downstream flow path 20B.

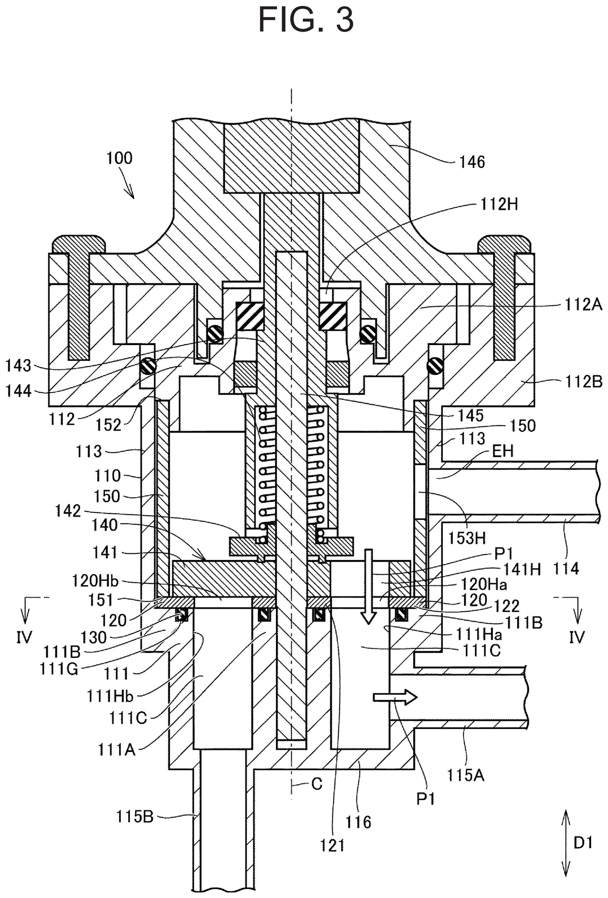

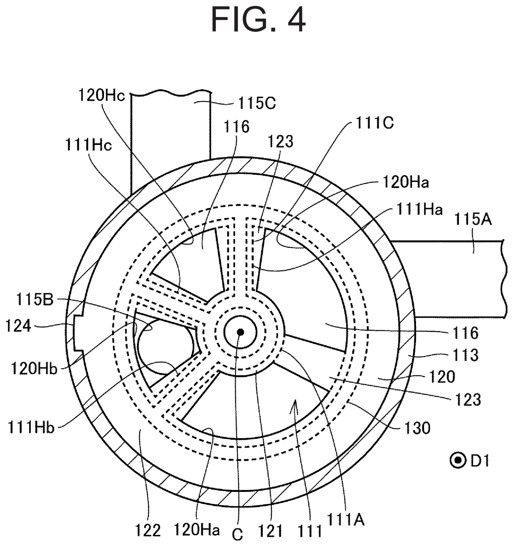

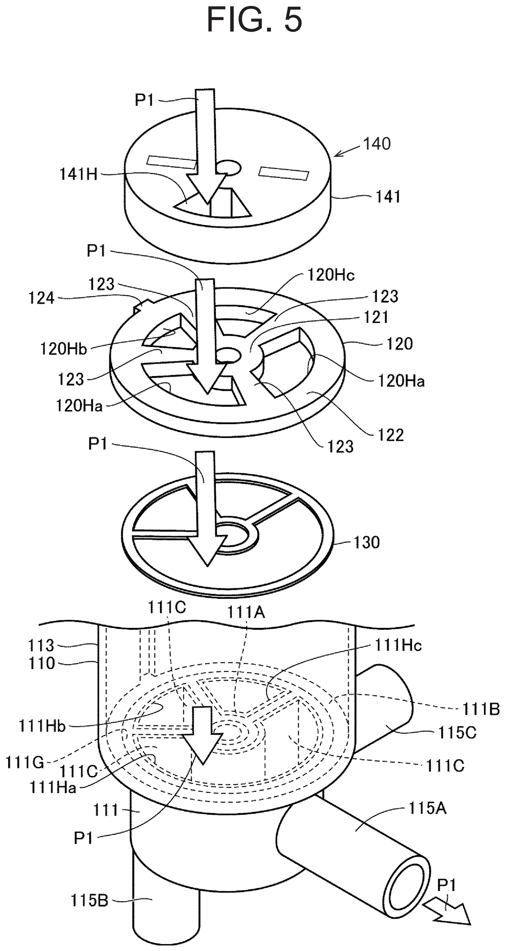

A specific configuration of the switching apparatus 100 is described. FIG. 3 is a schematic sectional view showing the switching apparatus according to one embodiment of the present disclosure. FIG. 4 is a sectional view of the switching apparatus in FIG. 3 seen from the direction of the arrows of line IV-IV. FIG. 5 is a partial exploded perspective view showing the switching apparatus according to one embodiment of the present disclosure.

As shown in FIG. 2 to FIG. 5, the switching apparatus 100 includes a case 110, an intermediate member 120, a gasket 130, a drive unit 140, and a locking portion 150.

The case 110 has a bottom wall portion 111, a top wall portion 112, and a side wall portion 113. In the bottom wall portion 111, a first outlet hole 111Ha, a second outlet hole 111Hb, and a third outlet hole 111Hc that each pass through the bottom wall portion 111 in a main direction D1 are provided. The first outlet hole 111Ha, the second outlet hole 111Hb, and the third outlet hole 111Hc are arranged in a circumferential direction about a virtual center axis line C extending to be parallel to the main direction D1.

The bottom wall portion 111 includes a central portion 111A, an annular portion 111B, and a plurality of partition portions 111C. The central portion 111A is positioned on the center axis line C. The annular portion 111B is positioned so as to surround the central portion 111A when seen from the main direction D1. The partition portions 111C are spaced apart from each other. Each of the partition portions 111C connects the central portion 111A and the annular portion 111B to each other. The first outlet hole 111Ha, the second outlet hole 111Hb, and the third outlet hole 111Hc are formed by a pair of the partition portions 111C adjacent to each other in the circumferential direction about the center axis line C, the central portion 111A, and the annular portion 111B.

In the bottom wall portion 111, groove portions 111G are further provided. The groove portions 111G are provided on a surface on the top wall portion 112 side when seen from the bottom wall portion 111. The groove portions 111G are provided in the central portion 111A, the annular portion 111B, and the partition portions 111C. The groove portion 111G in the partition portions 111C is connected to the groove portion 111G in the central portion 111A and the groove portion 111G in the annular portion 111B.

The top wall portion 112 faces the bottom wall portion 111 in the main direction D1. In the top wall portion 112, an insertion hole 112H that passes through the top wall portion 112 in the main direction D1 is provided. The insertion hole 112H is positioned on the center axis line C.

The top wall portion 112 includes a first top wall portion 112A and a second top wall portion 112B. The insertion hole 112H is provided in the first top wall portion 112A. The second top wall portion 112B is disposed on the outer circumferential side of the first top wall portion 112A about the center axis line C. The second top wall portion 112B is directly or indirectly fixed to the first top wall portion 112A.

The side wall portion 113 is positioned between the bottom wall portion 111 and the top wall portion 112. The side wall portion 113 has a substantially cylindrical external form about the center axis line C. The side wall portion 113 is connected to the bottom wall portion 111. The side wall portion 113 is connected to the annular portion 111B. The side wall portion 113 is integrally provided with the annular portion 111B. The side wall portion 113 is connected to the top wall portion 112. The side wall portion 113 is connected to the second top wall portion 112B. The side wall portion 113 is integrally provided with the second top wall portion 112B.

An inlet hole EH is provided in the case 110. The inlet hole EH is provided in the top wall portion 112 or the side wall portion 113. In the present embodiment, the inlet hole EH is provided in the side wall portion 113.

The case 110 further includes an inlet connection pipe 114, a first outlet pipe 115A, a second outlet pipe 115B, a third outlet pipe 115C, and a closed portion 116.

The inlet connection pipe 114 is connected to the inlet hole EH. In the present embodiment, the inlet connection pipe 114 is connected to the inlet hole EH in the side wall portion 113. The inlet connection pipe 114 is connected to the upstream pipe 15 of the upstream circuit 10 on the side opposite to the inlet hole EH side.

The inlet connection pipe 114 and the inlet hole EH illustrated in FIG. 3 are shown in positions that are different from those shown in FIG. 2 and FIG. 4 for convenience.

The first outlet pipe 115A is connected to the bottom wall portion 111. The first outlet pipe 115A extends from the bottom wall portion 111 in a direction orthogonal to the main direction D1. The inside of the first outlet pipe 115A communicates with the inner side of the first outlet hole 111Ha. The first outlet pipe 115A is connected to the first downstream pipe 25A of the first downstream flow path 20A on the side opposite to the bottom wall portion 111 side.

The second outlet pipe 115B is connected to the bottom wall portion 111. The second outlet pipe 115B is positioned opposite to the top wall portion 112 when seen from the bottom wall portion 111. The second outlet pipe 115B extends in the main direction D1. The second outlet pipe 115B is connected to one end of the second outlet hole 111Hb in the main direction D1.

The third outlet pipe 115C is connected to the bottom wall portion 111. The third outlet pipe 115C extends from the bottom wall portion 111 in a direction orthogonal to the main direction D1. The inside of the third outlet pipe 115C communicates with the inner side of the third outlet hole 111Hc. The third outlet pipe 115C is connected to the third downstream pipe 25C of the third downstream flow path 20C on the side opposite to the bottom wall portion 111 side.

The closed portion 116 is connected to the bottom wall portion 111. The closed portion 116 is positioned on the side opposite to the top wall portion 112 when seen from the bottom wall portion 111. The closed portion 116 closes one end of the first outlet hole 111Ha and one end of the third outlet hole 111Hc.

The intermediate member 120 is positioned between the bottom wall portion 111 and the top wall portion 112. In the intermediate member 120, a plurality of first communicating holes 120Ha, a second communicating hole 120Hb, and a third communicating hole 120Hc that pass through the intermediate member 120 in the main direction D1 are provided.

Each of the first communicating holes 120Ha is aligned with the first outlet hole 111Ha in the main direction D1. The second communicating hole 120Hb is aligned with the second outlet hole 111Hb in the main direction D1. The third communicating hole 120Hc is aligned with the third outlet hole 111Hc in the main direction D1.

End edges of the first communicating holes 120Ha are positioned on the inner side of the first outlet hole 111Ha when seen from the main direction D1 (see FIG. 4). An end edge of the second communicating hole 120Hb is positioned on the inner side of the second outlet hole 111Hb when seen from the main direction D1.

The intermediate member 120 has an intermediate central portion 121, an intermediate annular portion 122, a plurality of spokes 123, and a projecting portion 124. The intermediate central portion 121 is positioned on the center axis line C. The intermediate annular portion 122 is positioned so as to surround the intermediate central portion 121 when seen from the main direction D1. The spokes 123 are spaced apart from each other. Each of the spokes 123 connects the intermediate central portion 121 and the intermediate annular portion 122 to each other. Each of the first communicating holes 120Ha, the second communicating hole 120Hb, and the third communicating hole 120Hc is formed by a pair of the spokes 123 adjacent to each other in the circumferential direction about the center axis line C, the intermediate central portion 121, and the intermediate annular portion 122.

The partition portions 111C in the bottom wall portion 111 overlap with the spokes 123 when seen from the main direction D1. The width of each of the partition portions 111C in the bottom wall portion 111 in the circumferential direction is smaller than the width of the spoke 123 overlapping with the partition portions 111C.

The projecting portion 124 extends to the outer circumferential side from the intermediate annular portion 122. The projecting portion 124 is locked with respect to the side wall portion 113 in the circumferential direction about the center axis line C. As a result, the movement of the intermediate member 120 in the circumferential direction is restrained. Even when the drive unit 140 rotates about the center axis line C, the intermediate member 120 substantially does not rotate.

The gasket 130 seals a gap between the bottom wall portion 111 and the intermediate member 120. In the present embodiment, the gasket 130 is configured by one continuous member. Specifically, the gasket 130 is positioned between the central portion 111A and the intermediate central portion 121. The gasket 130 is positioned between the annular portion 111B and the intermediate annular portion. The gasket 130 is positioned between each of the partition portions 111C and the spokes 123 facing the partition portions 111C. The gasket 130 is disposed in a state of being compressed in the main direction D1 by the intermediate member 120 and the bottom wall portion 111.

The gasket 130 is disposed in the groove portions 111G of the bottom wall portion 111. The thickness in the main direction D1 of the gasket 130 that is not compressed in the main direction D1 is greater than the depth of each of the groove portions 111G.

The drive unit 140 is positioned opposite to the bottom wall portion 111 when seen from the intermediate member 120. The drive unit 140 is biased toward the intermediate member 120. The drive unit 140 is in contact with the intermediate member 120.

The drive unit 140 is configured to be driven to be switchable between a first state, a second state, and a third state. The drive unit 140 in the first state is shown in FIG. 3, and a partial exploded perspective view of the switching apparatus 100 in the first state is expressed in FIG. 5.

As shown in FIG. 3 and FIG. 5, the drive unit 140 in the first state faces the second communicating hole 120Hb and the third communicating hole 120Hc and forms a first route P1 through which the heat medium is flowable to the outside from the inside of the case 110 via the first communicating holes 120Ha and the first outlet hole 111Ha. The first route P1 is schematically shown by open arrows in FIG. 3 and FIG. 5. More specifically, the heat medium flows into the switching apparatus 100 from the upstream pipe 15 of the upstream circuit 10 via the inlet connection pipe 114 and the inlet hole EH. In the first route P1, the heat medium in the switching apparatus 100 can further flow out to the first downstream pipe 25A of the first downstream flow path 20A (see FIG. 2) via the first communicating holes 120Ha, the first outlet hole 111Ha, and the first outlet pipe 115A.

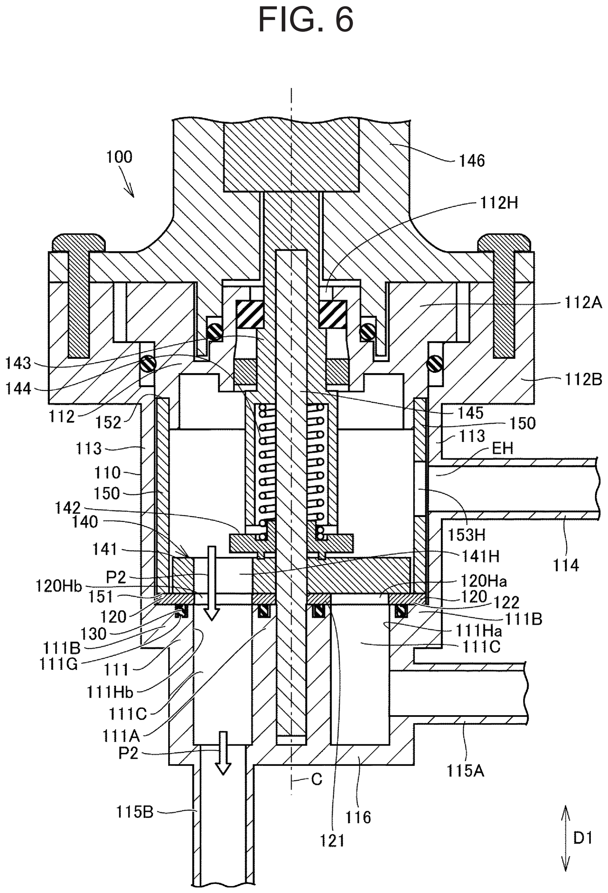

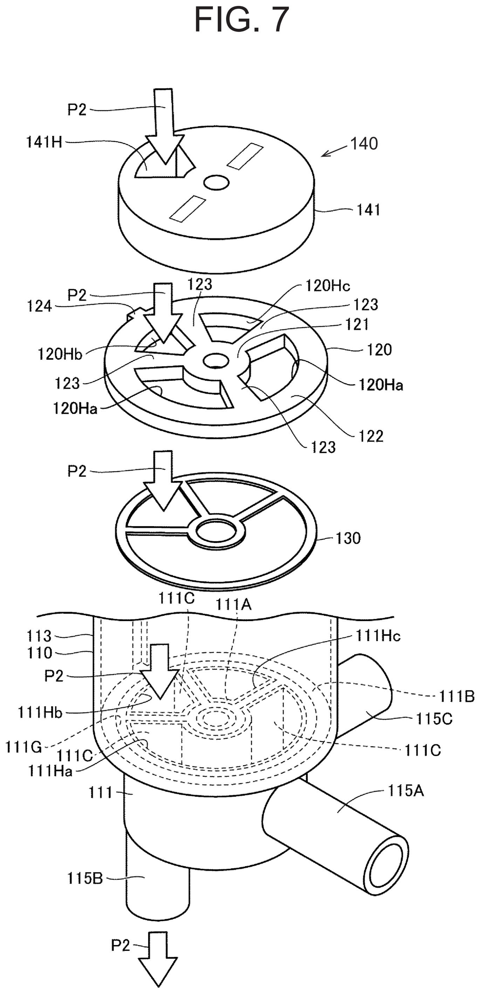

FIG. 6 is a schematic sectional view showing the switching apparatus when the drive unit is in the second state. FIG. 7 is a partial exploded perspective view of the switching apparatus when the drive unit is in the second state. As shown in FIG. 6 and FIG. 7, the drive unit 140 in the second state faces the first communicating holes 120Ha and the third communicating hole 120Hc and forms a second route P2 through which the heat medium is flowable to the outside from the inside of the case 110 via the second communicating hole 120Hb and the second outlet hole 111Hb. In FIG. 6 and FIG. 7, the second route P2 is shown by open arrows. More specifically, in the second route P2, the heat medium in the switching apparatus 100 can further flow out to the second downstream pipe 25B of the second downstream flow path 20B (see FIG. 2) via the second communicating hole 120Hb, the second outlet hole 111Hb, and the second outlet pipe 115B.

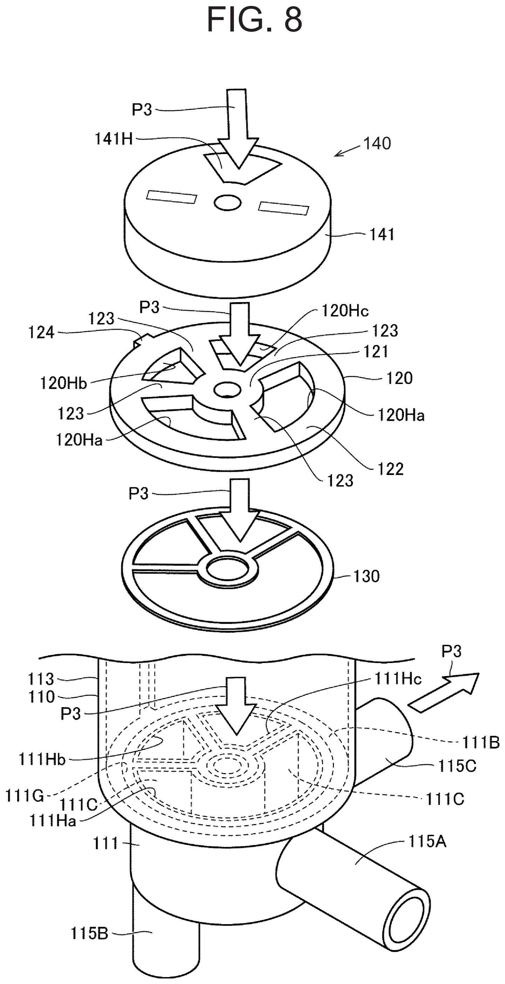

FIG. 8 is a partial exploded perspective view of the switching apparatus when the drive unit is in the third state. As shown in FIG. 8, the drive unit 140 in the third state faces the first communicating holes 120Ha and the second communicating hole 120Hb and forms a third route P3 through which the heat medium is flowable to the outside from the inside of the case 110 via the third communicating hole 120Hc and the third outlet hole 111Hc. In FIG. 8, the third route P3 is shown by open arrows. More specifically, in the third route P3, the heat medium in the switching apparatus 100 can further flow out to the third downstream pipe 25C of the third downstream flow path 20C (see FIG. 2) via the third communicating hole 120Hc, the third outlet hole 111Hc, and the third outlet pipe 115C.

A specific configuration of the drive unit 140 is described. However, the configuration of the drive unit 140 is not limited to that below. The drive unit 140 includes a drive disk 141, an engagement member 142, a motor shaft 143, a biasing member 144, a central shaft portion 145, and a motor main body 146.

The drive disk 141 has a substantially disk-shaped external form. The drive disk 141 turns about the center axis line C. In the drive disk 141, a disk hole 141H that passes through the drive disk 141 in the main direction D1 is provided. As a result of the drive disk 141 turning, the disk hole 141H is displaced in the circumferential direction about the center axis line C. In the first state, the drive disk 141 closes the second communicating hole 120Hb and the third communicating hole 120Hc, and the disk hole 141H is aligned with the first communicating holes 120Ha (see FIG. 3 and FIG. 5). In the second state, the drive disk 141 closes the first communicating holes 120Ha and the third communicating hole 120Hc, and the disk hole 141H is aligned with the second communicating hole 120Hb (see FIG. 6 and FIG. 7). In the third state, the drive disk 141 closes the first communicating holes 120Ha and the second communicating hole 120Hb, and the disk hole 141H is aligned with the third communicating hole 120Hc (see FIG. 8).

The engagement member 142 is engaged with the drive disk 141 in the circumferential direction about the center axis line C. The engagement member 142 causes the drive disk 141 to turn. The motor shaft 143 causes the engagement member 142 to turn. The motor shaft 143 passes through the top wall portion 112 in the main direction D1. The biasing member 144 is a spring, for example. The biasing member 144 is disposed between the motor shaft 143 and the engagement member 142 in the main direction D1. The biasing member 144 biases the motor shaft 143 and the engagement member 142 in directions separating the motor shaft 143 and the engagement member 142 from each other. The central shaft portion 145 extends on the center axis line C. The central shaft portion 145 is fit into the motor shaft 143 and the bottom wall portion 111. The central shaft portion 145 passes through the intermediate member 120, the gasket 130, and the drive disk 141. The motor main body 146 is provided on the top wall portion 112. The motor main body 146 causes the motor shaft 143 to turn.

As is shown FIG. 3, the locking portion 150 is provided so as to be locked with respect to the intermediate member 120 when an external force in a direction separating from the bottom wall portion 111 is applied to the intermediate member 120. In the present embodiment, the locking portion 150 is in abutment with the intermediate member 120 on the side opposite to the bottom wall portion 111 side of the intermediate member 120.

The locking portion 150 is a separate member from the case 110. The locking portion 150 is positioned between the top wall portion 112 and the intermediate member 120 and is in abutment with both the top wall portion 112 and the intermediate member 120. Specifically, the locking portion 150 is in abutment with the first top wall portion 112A.

The locking portion 150 is cylindrical. The drive unit 140 is disposed on the inner side of the locking portion 150. The locking portion 150 has a first opening end portion 151 and a second opening end portion 152 positioned opposite to the first opening end portion 151. The first opening end portion 151 is opened on one side of the main direction D1. The second opening end portion 152 is opened on the other side of the main direction D1. The first opening end portion 151 faces the intermediate member 120. The first opening end portion 151 abuts against the intermediate member 120 around the entire circumference. The second opening end portion 152 faces the top wall portion 112. The second opening end portion 152 abuts against the top wall portion 112 around the entire circumference.

In the locking portion 150, a side communicating hole 153H that provides communication between an inner circumferential side and an outer circumferential side of the locking portion 150 is provided. The side communicating hole 153H faces the inlet hole EH.

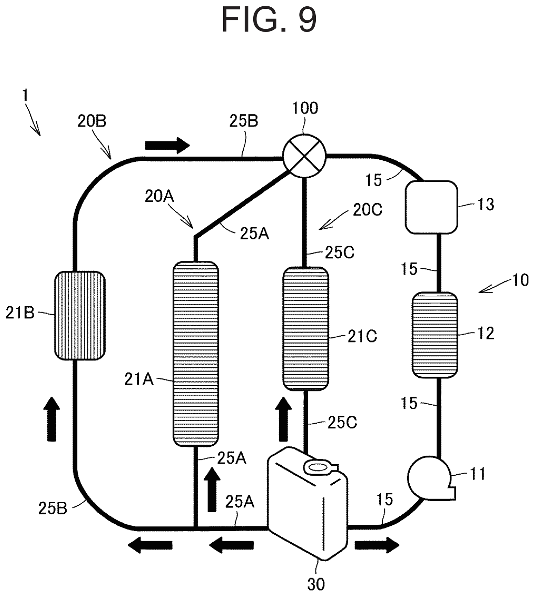

Here, a procedure of supplying the heat medium from the reservoir tank 30 before the operation of the heat management system 1 described above is described. FIG. 9 is a view showing the configuration of the heat management system in FIG. 1 in which an example of a flow of the heat medium supplied before the operation is shown. In FIG. 9, the flow of the heat medium is shown by black bold arrows.

As shown in FIG. 9, in the heat management system 1, the heat medium is supplied from the reservoir tank 30. Before the heat medium is supplied, a vacuum is drawn through the flow path of the heat medium via the reservoir tank 30 in advance. By the vacuum drawing, each of the upstream pipes 15, the first downstream pipes 25A, the second downstream pipes 25B, and the third downstream pipes 25C that are elastically deformable may be deformed by atmospheric pressure and be placed in a partially closed state. As a result, there may be cases in which the heat medium rushes toward an orientation opposite to the direction in which the heat medium flows at the time of the operation of the heat management system 1.

For example, as shown in FIG. 9, in the first downstream flow path 20A, the second downstream flow path 20B, and the third downstream flow path 20C, the heat medium may flow toward the switching apparatus 100 from the reservoir tank 30. The heat medium flowing backward may reach the switching apparatus 100 earlier than a heat medium that flows through the upstream circuit 10 and reaches the switching apparatus 100. In FIG. 9, an example in which the heat medium flowing backward through the second downstream flow path 20B reaches the switching apparatus 100 first is shown, for example.

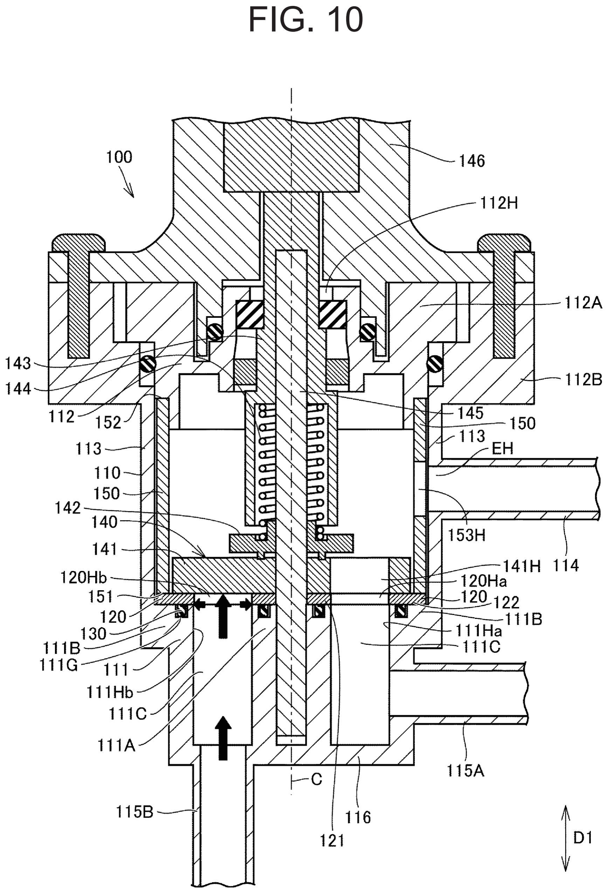

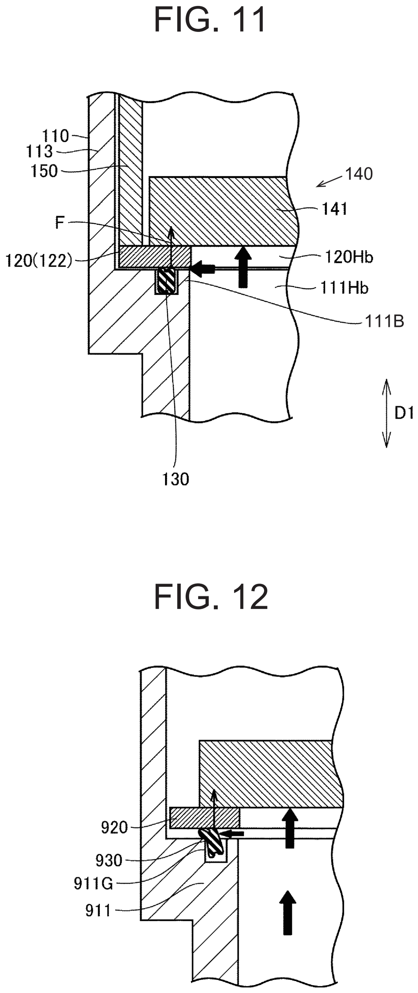

FIG. 10 is a sectional view showing the switching apparatus in FIG. 3 with the flow of the heat medium flowing backward. FIG. 11 is a sectional view showing the switching apparatus in FIG. 10 in a partially enlarged manner. In FIG. 10 and FIG. 11, the flow of the heat medium flowing backward is shown by black bold arrows.

As shown in FIG. 9 to FIG. 11, in the first state, when the heat medium flowing backward through the second downstream flow path 20B reaches the switching apparatus 100 first, the heat medium flowing backward from the second outlet hole 111Hb collides with the drive unit 140 through the second communicating hole 120Hb. As a result, the drive disk 141 is displaced so as to be separated from the intermediate member 120. As a result, a gap is generated between the drive disk 141 and the intermediate member 120, and the intermediate member 120 is subjected to pressure from the gasket 130 that has been compressed (see arrow F). Then, a gap is generated between the intermediate member 120 and the bottom wall portion 111. The heat medium may enter this gap, and the heat medium may further apply a force to the intermediate member 120 in a direction separating from the bottom wall portion 111. The heat medium that has entered the gap may press the gasket 130 in the radial direction with respect to the center axis line C.

However, in such a situation, the locking portion 150 is locked with respect to the intermediate member 120 in the main direction D1. As a result, the intermediate member 120 is restrained from being displaced so as to be separated from the bottom wall portion 111. In addition, the heat medium that enters the gap is restrained from pressing the gasket 130 in the radial direction with respect to the center axis line C and shifting the position of the gasket 130 in the radial direction.

How the gasket 130 is positionally shifted when the locking portion 150 is not provided is described. FIG. 12 is a partial sectional view of a switching apparatus according to a comparative example. The sectional view of the comparative example of FIG. 12 corresponds to the sectional view of the embodiment of FIG. 11. The switching apparatus according to the comparative example shown in FIG. 12 has the same configuration as the switching apparatus 100 according to the present embodiment except for not including the locking portion. As shown in FIG. 12, in the switching apparatus according to the comparative example, a heat medium that has entered a place between a bottom wall portion 911 and an intermediate member 920 presses a gasket 930 in the radial direction. As a result, the gasket 930 sticks out from a groove portion 911G. The gasket 930 that has stuck out partially bites into the place between the bottom wall portion 911 and the intermediate member 920 at a corner portion of the groove portion 911G. As a result, in the switching apparatus according to the comparative example, the heat medium may leak out to each other between each route (each circuit) of the heat medium.

As described above, the switching apparatus 100 according to the present embodiment includes the locking portion 150. The locking portion 150 is provided so as to be locked with respect to the intermediate member 120 when an external force is applied to the intermediate member 120 in a direction separating from the bottom wall portion 111.

With the configuration described above, there may be cases in which the drive unit 140 biased toward the intermediate member 120 is displaced so as to be separated from the intermediate member 120 when the heat medium flowing backward from the second outlet hole 111Hb passes through the second communicating hole 120Hb and collides with the drive unit 140 when the drive unit 140 is facing the second communicating hole 120Hb, for example. As a result, the heat medium may enter the gap between the intermediate member 120 and the bottom wall portion 111, and the heat medium may apply a force to the intermediate member 120 in a direction separating from the bottom wall portion 111. At this time, by locking the locking portion 150 with respect to the intermediate member 120, the intermediate member 120 can be restrained from being displaced so as to be separated from the bottom wall portion 111. Therefore, cases in which the heat medium that has entered the gap shifts the position of the gasket 130 between the intermediate member 120 and the bottom wall portion 111 can be reduced.

Therefore, the positional shift of a member disposed between the case 110 and the drive unit 140 can be reduced when the inside is filled with the heat medium.

In the present embodiment, the locking portion 150 is in abutment with the intermediate member 120 on the side opposite to the bottom wall portion 111 side of the intermediate member 120.

With the configuration described above, the intermediate member 120 can be further restrained from being displaced so as to be separated from the bottom wall portion 111 when the heat medium flows backward.

In the present embodiment, the locking portion 150 is a separate member from the case 110.

With the configuration described above, the locking portion 150 can be relatively easily disposed inside the case 110.

In the present embodiment, the locking portion 150 is positioned between the top wall portion 112 and the intermediate member 120 and is in abutment with both the top wall portion 112 and the intermediate member 120.

With the configuration described above, when the heat medium flows backward, the intermediate member 120 can be restrained even more from being displaced so as to be separated from the bottom wall portion 111.

In the present embodiment, the locking portion 150 is cylindrical. The locking portion 150 has the first opening end portion 151 and the second opening end portion 152 positioned opposite to the first opening end portion 151. The drive unit 140 is disposed on the inner side of the locking portion 150. The first opening end portion 151 faces the intermediate member 120. The second opening end portion 152 faces the top wall portion 112.

With the configuration described above, a region in which the locking portion 150 is locked with respect to the intermediate member 120 can be increased by the second opening end portion 152.

In the present embodiment, the inlet hole EH is provided in the side wall portion 113. In the locking portion 150, the side communicating hole 153H that provides communication between the inner circumferential side and the outer circumferential side of the locking portion 150 is provided. The side communicating hole 153H faces the inlet hole EH.

With the configuration described above, the locking portion 150 can be restrained from blocking the inflow of the heat medium from the inlet hole EH.

In the present embodiment, the end edges of the first communicating holes 120Ha are positioned on the inner side of the first outlet hole 111Ha when seen from the main direction D1. The end edge of the second communicating hole 120Hb is positioned on the inner side of the second outlet hole 111 Hb when seen from the main direction D1.

With the configuration described above, cases in which the heat medium enters a place between the bottom wall portion 111 and the intermediate member 120 can be reduced by the end edges of the first communicating holes 120Ha when the heat medium flows to the outside from the inside of the case 110 via the first outlet hole 111Ha or by the end edge of the second communicating hole 120Hb when the heat medium flows to the outside from the inside of the case 110 via the second outlet hole 111Hb. When the heat medium flows in an orientation opposite to the above, the heat medium that is to flow from the first outlet hole 111Ha or the second outlet hole 111Hb easily collides with end edge parts of those communicating holes. However, in the switching apparatus 100 according to an aspect of the present disclosure, the locking portion 150 is locked with respect to the intermediate member 120 at this time, and hence the intermediate member 120 is restrained from being displaced so as to be separated from the bottom wall portion 111.

In the description of the embodiment described above, combinable configurations may be combined with each other.

The embodiment disclosed herein should be considered in all respects as illustrative and not restrictive. The scope of the present disclosure is defined by the claims rather than the foregoing description, and is intended to include all changes that fall within the meaning and scope equivalent to the claims.

## Claims

1. A switching apparatus (100) configured to switch a flowing route of a heat medium in a heat management system (1), the switching apparatus (100) comprising:
a case (110);
an intermediate member (120);
a gasket (130);
a drive unit (140); and
a locking portion (150), wherein:
the case (110) includes:
a bottom wall portion (111) in which a first outlet hole (111Ha) and a second outlet hole (111Hb) that each pass through the bottom wall portion (111) in a main direction are provided;
a top wall portion (112) facing the bottom wall portion (111) in the main direction; and
a side wall portion (113) positioned between the bottom wall portion (111) and the top wall portion (112);
an inlet hole (EH) is provided in the top wall portion (112) or the side wall portion (113);
the intermediate member (120) is positioned between the bottom wall portion (111) and the top wall portion (112);
a first communicating hole (120Ha) and a second communicating hole (120Hb) that each pass through the intermediate member (120) in the main direction are provided in the intermediate member (120);
the first communicating hole (120Ha) is aligned with the first outlet hole (111Ha) in the main direction;
the second communicating hole (120Hb) is aligned with the second outlet hole (111Hb) in the main direction;
the gasket (130) is configured to seal a gap between the bottom wall portion (111) and the intermediate member (120);
the drive unit (140) is on opposite side of the intermediate member (120) from the bottom wall portion (111) and is biased toward the intermediate member (120);
the drive unit (140) is configured to be driven to be switched between a state of facing the second communicating hole (120Hb) and forming a first route (P1) through which the heat medium flows to an outside from an inside of the case (110) via the first communicating hole (120Ha) and the first outlet hole (111Ha), and a state of facing the first communicating hole (120Ha) and forming a second route (P2) through which the heat medium flows to the outside from the inside of the case (110) via the second communicating hole (120Hb) and the second outlet hole (111Hb); and
the locking portion (150) is provided so as to be locked with respect to the intermediate member (120) upon application of an external force to the intermediate member (120) in a direction separating from the bottom wall portion (111).

2. The switching apparatus (100) according to claim 1, wherein the locking portion (150) is in abutment with the intermediate member (120) on a side opposite to the bottom wall portion (111).

3. The switching apparatus (100) according to claim 1, wherein the locking portion (150) is a separate member from the case (110).

4. The switching apparatus (100) according to claim 3, wherein the locking portion (150) is positioned between the top wall portion (112) and the intermediate member (120) and is in abutment with both the top wall portion (112) and the intermediate member (120).

5. The switching apparatus (100) according to any one of claims 1 to 4, wherein:
the locking portion (150) is cylindrical and has a first opening end portion (151) and a second opening end portion (152) positioned opposite to the first opening end portion (151);
the drive unit (140) is disposed on an inner side of the locking portion (150);
the first opening end portion (151) faces the intermediate member (120); and
the second opening end portion (152) faces the top wall portion (112).

6. The switching apparatus (100) according to claim 5, wherein:
the inlet hole (EH) is provided in the side wall portion (113);
a side communicating hole that provides communication between an inner circumferential side and an outer circumferential side of the locking portion (150) is provided in the locking portion (150); and
the side communicating hole faces the inlet hole (EH).

7. The switching apparatus (100) according to claim 1, wherein:
an end edge of the first communicating hole (120Ha) is positioned on an inner side of the first outlet hole (111Ha) in a view along the main direction; and
an end edge of the second communicating hole (120Hb) is positioned on an inner side of the second outlet hole (111Hb) in the view along the main direction.
